# EUROPEAN PATENT APPLICATION

(11) **EP 4 831 223 A1**
(43) Date of publication of application: **28.10.2026**
(21) Application number: 24908145.6
(22) Date of filing: 20.12.2024
(51) Int. Cl.: C08J 3/02, B01J 13/00

(54) **POLYHYDROXYALKANOATE EMULSION PREPARATION METHOD AND POLYHYDROXYALKANOATE EMULSION PREPARED USING SAME**

(30) Priority: 22.12.2023 KR 20230190390
(71) Applicant: CJ Cheiljedang Corporation, Seoul 04560 (KR)
(72) Inventor: SHIM, Yoo-Kyoung, Seoul 04560 (KR); JEONG, Jae Deok, Seoul 04560 (KR); HEO, Min Haeng, Seoul 04560 (KR); PARK, Soyun, Seoul 04560 (KR); YOON, Ki Chull, Seoul 04560 (KR)
(74) Representative: Meissner Bolte Partnerschaft mbB
(86) International application number: PCT/KR2024/020798
(87) International publication number: WO 2025/135863

(57) **Abstract**

The present disclosure relates to a polyhydroxyalkanoate (PHA) emulsion preparation method and a polyhydroxyalkanoate emulsion prepared using same. Specifically, the PHA emulsion preparation method comprises preparing a suspension containing PHA; and removing defects from the suspension, wherein removing defects is performed under a pressure of 200-2,000 bar.

## Description

### Technical Field

The present disclosure relates to a process for preparing a novel polyhydroxyalkanoate emulsion and to a polyhydroxyalkanoate emulsion prepared thereby.

### Background Art

In recent years, as concerns about environmental problems have increased, research on the treatment and recycling of various household wastes has been actively conducted. Specifically, although polymer materials, which are inexpensive and have excellent processability, are widely used to manufacture various products such as paper, films, fibers, packaging materials, bottles, and containers, when the lifespan of these products is over, harmful substances may be discharged when they are incinerated, and it takes hundreds of years depending on their types to completely decompose naturally.

Therefore, research on biodegradable polymers continues, which can be decomposed within a short period of time to enhance environmental friendliness, while enhancing mechanical properties, oil resistance, water resistance, and processability, and increasing the lifespan of products themselves, thereby reducing the amount of waste or enhancing their recyclability.

Polyhydroxyalkanoates (PHAs) are biodegradable polymers composed of several types of hydroxyl carboxylic acids produced by numerous microorganisms and used as intracellular storage materials. Polyhydroxyalkanoates have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

In order to apply biodegradable polymers to products, a coating process using an emulsion containing biodegradable polymers is used. In such an event, in order to enhance coating quality, a process is needed to remove defects that may occur due to the agglomeration of fine particles during the process of preparing an emulsion. In the past, particles such as grit and grains formed during the process of preparing an emulsion were removed through a filtration process. However, the filtration process takes a long period of time, and it is difficult to perform the preparation process of emulsions as a continuous process, resulting in low processability and productivity.

### Disclosure of Invention

### Technical Problem

Accordingly, the present disclosure aims to provide a process for preparing a polyhydroxyalkanoate emulsion that is environmentally friendly by virtue of its excellent biodegradability and biocompatibility, and defects in the emulsion can be efficiently removed, resulting in excellent processability and productivity, and a polyhydroxyalkanoate emulsion prepared thereby.

### Solution to Problem

The process for preparing a polyhydroxyalkanoate emulsion according to an embodiment of the present disclosure comprises preparing a suspension comprising a polyhydroxyalkanoate (PHA); and removing defects from the suspension, wherein the removing the defects is carried out at a pressure of 200 bar to 2,000 bar.

According to an embodiment of the present disclosure, the preparing the suspension and the removing the defects from the suspension may be carried out at different pressures.

According to an embodiment of the present disclosure, the removing the defects may be carried out for a time period of greater than 5 minutes and up to 60 minutes.

According to an embodiment of the present disclosure, the defects may comprise particles comprising grit or grains.

According to an embodiment of the present disclosure, the particles may have an average particle diameter of 6 µm or more and an average particle size distribution of 10 µm or less.

According to an embodiment of the present disclosure, a surfactant may be added in an amount of 2.5 parts by weight to 20 parts by weight relative to 100 parts by weight of the PHA in the preparing the suspension.

According to an embodiment of the present disclosure, the surfactant may comprise at least one selected from the group consisting of polyvinyl alcohol, sodium dodecylbenzene sulfonate, polyvinylpyrrolidone, methyl polyethylene alkyl ether, alkyl benzene sulfonate, nonylphenol ether sulfate, sodium lauryl sulfate, lithium dodecyl sulfate, alkyl phosphate, glyceryl ester, and polypropylene glycol ester.

According to an embodiment of the present disclosure, the preparing the suspension may comprise performing a high-speed dispersion using a homogenizer under room temperature and atmospheric pressure, at a speed of 55% to 85% of the maximum rotation speed per minute (rpm) of the homogenizer for 10 minutes to 60 minutes.

According to an embodiment of the present disclosure, the process may further comprise adding at least one additive selected from the group consisting of a thickener, an antimicrobial agent, a stabilizer, and a pH adjusting agent to the suspension from which the defect has been removed.

According to an embodiment of the present disclosure, the amount of the additive may be 0.005 parts by weight to 30 parts by weight relative to 100 parts by weight of the suspension from which the defect has been removed.

According to an embodiment of the present disclosure, the PHA may be a polyhydroxyalkanoate copolymer comprising a 4-hydroxybutyrate (4-HB) repeat unit and a 3-hydroxybutyrate (3-HB) repeat unit and may comprise the 4-hydroxybutyrate (4-HB) repeat unit in an amount of 0.1% by weight to 60% by weight.

According to an embodiment of the present disclosure, the PHA may have a weight average molecular weight of 30,000 g/mole to 1,200,000 g/mole.

According to an embodiment of the present disclosure, the PHA may comprise a semi-crystalline PHA.

According to an embodiment of the present disclosure, the semi-crystalline PHA may comprise a 4-hydroxybutyrate (4-HB) repeat unit in an amount of 0.1% by weight to 30% by weight and have a glass transition temperature (Tg) of -30°C to 80°C, a crystallization temperature (Tc) of 30°C to 130°C, and a melting temperature (Tm) of 100°C to 175°C.

The present disclosure provides a polyhydroxyalkanoate (PHA) emulsion prepared by the process for preparing a polyhydroxyalkanoate (PHA) emulsion.

According to an embodiment of the present disclosure, the PHA emulsion may have an average particle size of 1.5 µm to 4.5 µm, a particle size deviation of ±5 µm or less, a polydispersity index (PDI) of 3 or less, a viscosity of 100 cps to 3,000 cps, and a pH of 6.5 to 11.

### Advantageous Effects of Invention

The process for preparing a PHA emulsion according to an embodiment of the present disclosure comprises preparing a suspension comprising a polyhydroxyalkanoate (PHA); and removing defects from the suspension, wherein the removing the defects is carried out at a pressure of 200 bar to 2,000 bar, thereby enhancing processability and productivity.

Specifically, in the filtration process used in the past, it usually took a long process time of 90 minutes or more to sufficiently obtain the effect of removing defects caused by the agglomeration of fine particles during the process of preparing an emulsion. The filtration process performed during the preparation process of emulsion made it difficult to perform the preparation process of emulsion as a continuous process, resulting in poor processability and productivity.

However, in the process for preparing a PHA emulsion according to an embodiment of the present disclosure, a suspension comprising a PHA is prepared, and the defect in the suspension is removed at a pressure of 200 bar to 2,000 bar. As a result, the simple process of controlling pressure, without additional equipment, can sufficiently remove defects such as particles comprising grit or grains in a short process time, and the excellent connection with subsequent processes makes a continuous process possible, resulting in excellent processability and productivity.

### Brief Description of Drawing

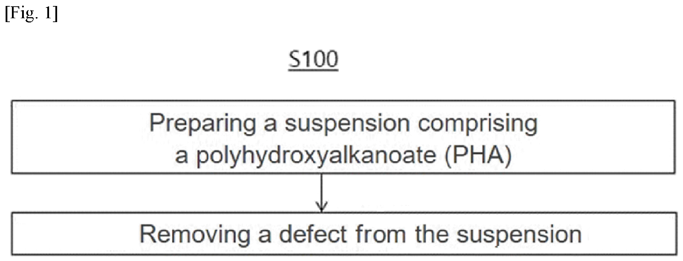

Fig. 1 shows a schematic flow chart (S100) of the process for preparing a polyhydroxyalkanoate (PHA) emulsion according to an embodiment of the present disclosure.

### Best Mode for Carrying out the Invention

Hereinafter, the present disclosure will be described in detail. The present disclosure is not limited to the disclosures given below, but it may be modified into various forms as long as the gist of the disclosure is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about" unless otherwise indicated.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another.

### Process for preparing a PHA emulsion

The process for preparing a polyhydroxyalkanoate emulsion according to an embodiment of the present disclosure comprises preparing a suspension comprising a polyhydroxyalkanoate (PHA); and removing defects from the suspension, wherein theremoving the defects is carried out at a pressure of 200 bar to 2,000 bar.

In the process of preparing an emulsion using a PHA, defects, more specifically grit or grains, may be formed in the suspension due to the agglomeration of fine particles depending on the compatibility between the components or dispersibility. In order to enhance the quality of an emulsion, such as its coatability, a process for removing particles comprising such grit or grains is necessary.

Specifically, the particles may comprise sediment, aggregates, grit, grains, or the like. They may comprise uncrushed particles, undispersed particles, or foreign substances generated in the process for preparing a highly crystalline PHA. As an example, the particles may comprise grit.

The particles may have an average particle diameter of 6 µm or more and an average particle size distribution of 10 µm or less. For example, the average particle diameter of the particles in the suspension may be 7 µm or more, 10 µm or more, or 20 µm or more, and may be 300 µm or less, 250 µm or less, or 200 µm or less. In addition, the average particle size distribution of the particles in the suspension may be 9.5 µm or less, 8 µm or less, 5 µm or less, or 3 µm or less. The average particle diameter of the particles is measured by a particle size analyzer (product name: LS 13 320, manufacturer: Beckman Coulter) from a particle size distribution (PSD), and it may be the cumulative 50% particle diameter (D50) in the particle size distribution.

In the process for preparing a PHA emulsion according to an embodiment of the present disclosure, a suspension comprising a PHA is prepared, and the defect in the suspension is removed at a pressure of 200 bar to 2,000 bar. As a result, it is possible to effectively remove defects such as particles comprising grit or grains. Thus, in the process for preparing a PHA emulsion according to an embodiment of the present disclosure, the simple process of controlling pressure, without additional equipment, can sufficiently remove defects such as particles comprising grit or grains in a short process time, and the excellent connection with subsequent processes makes a continuous process possible, resulting in excellent processability and productivity.

Fig. 1 shows a schematic flow chart (S100) of the process for preparing a polyhydroxyalkanoate (PHA) emulsion according to an embodiment of the present disclosure. Referring to Fig. 1, it will be described in detail as follows.

### Preparation of an emulsion comprising a PHA

The process for preparing a PHA emulsion according to an embodiment of the present disclosure comprises preparing a suspension comprising a PHA.

According to an embodiment of the present disclosure, the suspension comprises a PHA. As a specific example, the suspension may be one in which a PHA in a powder form is dispersed in distilled water.

PHA is a natural thermoplastic polyester polymer that accumulates in microbial cells. Since it is a biodegradable material, it can be composted and finally decomposed into carbon dioxide, water, and organic waste without generating toxic waste.

Specifically, the PHA is formed by accumulating a PHA in microbial cells to store carbon and energy when certain bacteria are supplied with nutrients (nitrogen source, phosphorus, and the like) disproportionately.

In addition, PHA has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

In particular, unlike other environmentally friendly plastic materials such as PBS, PLA, and PTT, PHA can be synthesized from more than 150 types of monomers, so that hundreds of types of PHA can be prepared depending on the types of monomers. Hundreds of different types of PHAs depending on the types of monomers have completely different structures and properties. Therefore, research is continuing on the structures and properties of different types of monomers that constitute a PHA and their compatibility with other components.

The PHA may comprise a single monomer repeat unit in living cells and may be formed by polymerizing one or more monomer repeat units. Specifically, the PHA may be a homo-polyhydroxyalkanoate (hereinafter, referred to as HOMO PHA) or a polyhydroxyalkanoate copolymer (hereinafter, referred to as a PHA copolymer), that is, a copolymer in which different repeat units are regularly or randomly distributed in the polymer chains.

Examples of repeat units that may be contained in the PHA include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA may comprise one or more repeat units selected from the above.

Specifically, the PHA may comprise one or more repeat units selected from the group consisting of 3-HB, 4-HB, 3-HP, 3-HH, 3-HV, 4-HV, 5-HV, and 6-HH.

More specifically, the PHA may comprise a 4-HB repeat unit in an amount of 0.1% by weight to 60% by weight. For example, the PHA may comprise a 4-HB repeat unit in an amount of 0.2% by weight to 50% by weight, 0.5% by weight to 40% by weight, 1% by weight to 25% by weight, 2% by weight to 15% by weight, or 3% by weight to 10% by weight. As the content of a 4-HB repeat unit satisfies the above range, it is possible to secure sufficient biodegradability to be decomposed in soil and sea and to enhance coatability and processability.

In addition, the PHA may be a PHA copolymer that comprises a 4-HB repeat unit and further comprises one repeat unit different from the 4-HB repeat unit, or two, three, four, five, six, or more repeat units different from each other.

In addition, the PHA may comprise isomers. For example, the PHA may comprise structural isomers, enantiomers, or geometric isomers. Specifically, the PHA may comprise structural isomers.

In addition, the PHA may be a PHA copolymer with controlled crystallinity. For example, the PHA may comprise at least one or more of a 4-HB repeat unit, and the content of the 4-HB repeat unit may be controlled to adjust the crystallinity of the PHA.

For example, the PHA may be a PHA copolymer that comprises one or more repeat units selected from the group consisting of 3-HB, 4-HB, 3-HP, 3-HH, 3-HV, 4-HV, 5-HV, and 6-HH.

Specifically, the PHA copolymer may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA copolymer may comprise a 4-HB repeat unit and a 3-HB repeat unit. For example, the PHA may be poly-3-hydroxybutyrate-co-4-hydroxybutyrate (hereinafter, referred to as P3HB-co-4HB).

In addition, the PHA may be a PHA copolymer that comprises a 4-HB repeat unit and a 3-HB repeat unit and may comprise the 3-HB repeat unit in an amount of 20% by weight or more. For example, the PHA may comprise the 3-HB repeat unit in an amount of 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less.

In addition, the PHA may have a weight average molecular weight of 30,000 g/mole to 1,200,000 g/mole. For example, the weight average molecular weight of the PHA may be 50,000 g/mole to 1,000,000 g/mole, 100,000 g/mole to 850,000 g/mole, 200,000 g/mole to 600,000 g/mole, 250,000 g/mole to 500,000 g/mole, or 300,000 g/mole to 450,000 g/mole.

The PHA whose crystallinity is adjusted may be one in which its crystallinity and amorphousness are adjusted as the irregularities are increased in its molecular structure. Specifically, the types or ratios of the monomers or the types or contents of the isomers may be adjusted.

According to an embodiment of the present disclosure, the PHA may comprise a semi-crystalline PHA. Specifically, the PHA may comprise a semi-crystalline PHA with controlled crystallinity. More specifically, the PHA may be composed of a semi-crystalline PHA with controlled crystallinity. Further, the PHA used in an embodiment of the present disclosure may be a mixture of a semi-crystalline PHA with controlled crystallinity and an amorphous PHA.

The semi-crystalline PHA resin may comprise a 4-hydroxybutyrate (4-HB) repeat unit in an amount of 0.1% by weight to 30% by weight. For example, the semi-crystalline PHA may comprise a 4-HB repeat unit in an amount of 0.2% by weight to 30% by weight, 0.5% by weight to 20% by weight, 1% by weight to 15% by weight, 2% by weight to 10% by weight, or 3% by weight to 10% by weight.

The glass transition temperature (Tg) of the semi-crystalline PHA may be -30°C to 80°C, -30°C to 10°C, -25°C to 5°C, -25°C to 0°C, -20°C to 0°C, or -15°C to 0°C. The crystallization temperature (Tc) of the semi-crystalline PHA may be 30°C to 130°C, 45°C to 125°C, 50°C to 120°C, 65°C to 115°C, or 70°C to 110°C. The melting temperature (Tm) thereof may be 100°C to 175°C, 105°C to 170°C, 105°C to 165°C, 110°C to 160°C, or 115°C to 150°C.

According to an embodiment of the present disclosure, the suspension may comprise the PHA in an amount of 5% by weight to 95% by weight. For example, the content of the PHA may be 5% by weight to 85% by weight, 10% by weight to 75% by weight, 15% by weight to 60% by weight, 25% by weight to 55% by weight, or 30% by weight to 50% by weight, based on the total weight of the suspension. As the content of the PHA satisfies the above range, it is possible to secure sufficient biodegradability to be decomposed in soil and sea and to enhance coatability and processability.

In addition, in the preparing the suspension, a surfactant may be added in an amount of 2.5 parts by weight to 20 parts by weight relative to 100 parts by weight of the PHA.

For example, the surfactant may comprise at least one selected from the group consisting of polyvinyl alcohol, sodium dodecylbenzene sulfonate, polyvinylpyrrolidone, methyl polyethylene alkyl ether, alkyl benzene sulfonate, nonylphenol ether sulfate, sodium lauryl sulfate, lithium dodecyl sulfate, alkyl phosphate, glyceryl ester, polypropylene glycol ester, polyacrylate-based compounds, fatty acid-based compounds, acrylic acid-based compounds, and acrylic-based ammonia salts.

For example, the amount of the surfactant added may be 2.5 parts by weight to 15 parts by weight, 3 parts by weight to 12 parts by weight, 3.5 parts by weight to 10 parts by weight, or 3.5 parts by weight to 7 parts by weight, relative to 100 parts by weight of the PHA.

According to an embodiment of the present disclosure, the preparing the suspension may be carried out under room temperature and atmospheric pressure. More specifically, the preparing the suspension may comprise performing a high-speed dispersion using a homogenizer under room temperature and atmospheric pressure, at a speed of 55% to 85% of the maximum rotation speed per minute (rpm) of the homogenizer for 10 minutes to 60 minutes.

As a specific example, the preparing the suspension may comprise performing a high-speed dispersion using a homogenizer under room temperature and atmospheric pressure, at a speed of 58% to 83%, 60% to 80%, 65% to 80%, or 65% to 75% of the maximum rotation speed per minute (rpm) of the homogenizer for 15 minutes to 50 minutes, 20 minutes to 45 minutes, or 25 minutes to 40 minutes.

### Removal of a defect from the suspension

The process for preparing a PHA emulsion according to an embodiment of the present disclosure comprises removing the defects from the suspension.

According to an embodiment of the present disclosure, the preparing the suspension and the removing the defects from the suspension may be carried out at different pressures. Specifically, the pressure at which the defect removal step is carried out may be higher than the pressure at which the suspension preparation step is carried out.

In the process for preparing a PHA emulsion according to an embodiment of the present disclosure, the pressure of the entire steps of preparing a PHA emulsion is not uniformly controlled; rather, the pressure of the defect removal step and that of the suspension preparation step are set to be different, more specifically, the pressure of the defect removal step is set to be high, whereby it is possible to remove a defect more effectively and to enhance processability and productivity.

As a specific example, the preparing the suspension may be carried out at atmospheric pressure, and the removing the defects may be carried out at a pressure of 200 bar to 2,000 bar.

For example, the removing the defects may be carried out at a pressure of 200 bar to 1,800 bar, 200 bar to 1,500 bar, or 200 bar to 1,000 bar. In addition, the removing the defects may be carried out for a time period of greater than 5 minutes to 60 minutes. For example, the defect removal step may be carried out for 6 minutes to 45 minutes, 7 minutes to 35 minutes, or 7 minutes to 30 minutes. As an example, the defect removal step may be a solid-liquid dispersion step.

As the pressure at which the defect removal step is carried out satisfies the above range, defects such as particles comprising grit or grains can be effectively removed in a short period of time, while the dispersibility and coatability of the PHA emulsion finally produced can be enhanced.

Meanwhile, the process for preparing a PHA emulsion according to an embodiment of the present disclosure may further comprise adding at least one additive selected from the group consisting of a thickener, an antimicrobial agent, a stabilizer, and a pH adjuster to the suspension from which the defect has been removed. As a specific example, the additive may be added after the solid-liquid dispersion step.

The amount of the additive may be 0.005 parts by weight to 30 parts by weight relative to 100 parts by weight of the suspension from which the defect has been removed. For example, the amount of the additive added may be 0.005 parts by weight to 25 parts by weight, 0.01 parts by weight to 30 parts by weight, 0.01 parts by weight to 25 parts by weight, 0.05 parts by weight to 20 parts by weight, 0.1 parts by weight to 20 parts by weight, 0.2 parts by weight to 20 parts by weight, 0.5 parts by weight to 20 parts by weight, 1 parts by weight to 18 parts by weight, 3 parts by weight to 16 parts by weight, or 4 parts by weight to 15 parts by weight, relative to 100 parts by weight of the suspension from which the defect has been removed.

The thickener may comprise at least one selected from the group consisting of gum, cellulose compounds, and inorganic particles. For example, the thickener may be at least one selected from the group consisting of carrageenan, alginin, alginic acid, sodium alginate, guar gum, xanthan gum, carboxylmethyl cellulose, clay, montmorillonite (MMT), silica, collagen, alginate, gelatin, furcellaran, agar, casein, locust bean gum, pectin, polyethylene oxide, polyethylene glycol, polyvinyl alcohol, and polyvinylpyrrolidone, but it is not limited thereto.

The thickener may be added in an amount of 0.005 parts by weight to 5 parts by weight relative to 100 parts by weight of the suspension from which the defect has been removed. For example, the amount of the thickener added may be 0.01 parts by weight to 5 parts by weight, 0.05 parts by weight to 4.5 parts by weight, 0.1 parts by weight to 4 parts by weight, or 0.15 parts by weight to 3 parts by weight, relative to 100 parts by weight of the suspension from which the defect has been removed.

The antimicrobial agent may be at least one natural antibacterial agent selected from the group consisting of organic acids, bacteriocins, and calcium preparations, colloids, or a compound comprising an element such as silver. The antimicrobial agent may be at least one selected from the group consisting of polylysine, benzisothiazolinone, vinegar powder, chitooligosaccharide, hydrogen peroxide, ethylenediaminetetraacetic acid, potassium sorbate, sorbic acid, propionic acid, potassium propionate, sodium benzoate, 1,2-hexanediol, and 1,2-octanediol, but it is not limited thereto.

The antimicrobial agent may be added in an amount of 0.005 parts by weight to 5 parts by weight relative to 100 parts by weight of the suspension from which the defect has been removed. For example, the amount of the antimicrobial agent added may be 0.01 parts by weight to 5 parts by weight, 0.05 parts by weight to 4 parts by weight, 0.1 parts by weight to 3 parts by weight, or 0.2 parts by weight to 2 parts by weight, relative to 100 parts by weight of the suspension from which the defect has been removed.

The stabilizer is an additive for protecting against oxidation and heat and for preventing a color change. Any commonly used stabilizer may be used as the stabilizer as long as the effects of the present disclosure are not impaired.

The stabilizer may be added in an amount of 0.005 parts by weight to 10 parts by weight relative to 100 parts by weight of the suspension from which the defect has been removed. For example, the amount of the stabilizer added may be 0.01 parts by weight to 10 parts by weight, 0.02 parts by weight to 10 parts by weight, 0.05 parts by weight to 9 parts by weight, or 0.1 parts by weight to 8 parts by weight, relative to 100 parts by weight of the suspension from which the defect has been removed.

The pH adjuster refers to a substance that is added to a solution to adjust pH. It may comprise both a pH reducing agent for decreasing the pH and a pH increasing agent for increasing the pH. Specifically, the pH reducing agent may be a strongly acidic substance such as sulfuric acid and hydrochloric acid or an aqueous ammonium salt solution, and the pH increasing agent may be a basic substance such as ammonia water, sodium hydroxide, lithium hydroxide, and potassium hydroxide, or an aqueous acetate salt solution.

For example, the pH adjuster may be at least one selected from the group consisting of acetic acid, lactic acid, hydrochloric acid, phosphoric acid, sodium hydroxide, citric acid, malic acid, fumaric acid, potassium phosphate, sodium bicarbonate, and sodium phosphate, but it is not limited thereto.

The pH adjuster may be added in an amount of 0.005 parts by weight to 10 parts by weight relative to 100 parts by weight of the suspension from which the defect has been removed. For example, the amount of the pH adjuster added may be 0.01 parts by weight to 10 parts by weight, 0.02 parts by weight to 10 parts by weight, 0.05 parts by weight to 9 parts by weight, or 0.1 parts by weight to 8 parts by weight, relative to 100 parts by weight of the suspension from which the defect has been removed.

### PHA emulsion

The present disclosure provides a polyhydroxyalkanoate (PHA) emulsion prepared by the process for preparing a polyhydroxyalkanoate (PHA) emulsion.

The PHA emulsion may have an average particle size of 1.5 µm to 4.5 µm. For example, the average particle size of the PHA emulsion may be 4 µm or less, 3.5 µm or less, or 3.1 µm or less. Specifically, the average particle size of the PHA emulsion may be 1.6 µm to 4 µm, 1.8 µm to 3.5 µm, 2 µm to 3.2 µm, or 2.3 µm to 3.1 µm.

The PHA emulsion may have a particle size deviation of ±5 µm or less. For example, the particle size deviation of the PHA emulsion may be ±3.5 µm or less, ±3 µm or less, or ±2 µm or less.

The PHA emulsion may have a polydispersity index (PDI) of 3 or less. For example, the polydispersity index of the PHA emulsion may be 2.5 or less or 2 or less.

The PHA emulsion may have a viscosity of 100 cps to 3,000 cps. For example, the viscosity of the PHA emulsion may be 150 cps to 3,000 cps, 200 cps to 2,500 cps, 300 cps to 2,000 cps, or 450 cps to 1,800 cps.

The PHA emulsion may have a pH of 6.5 to 11. For example, the pH of the PHA emulsion may be 7 to 10.5 or 7.5 to 10.

In addition, the PHA emulsion may have a solids content of 5% by weight to 70% by weight. For example, the solids content of the PHA emulsion may be 5% by weight to 65% by weight, 5% by weight to 60% by weight, 10% by weight to 60% by weight, 10% by weight to 50% by weight, 15% by weight to 50% by weight, 20% by weight to 50% by weight, or 25% by weight to 45% by weight.

### Mode for the Invention

Hereinafter, the present disclosure will be described in more detail with reference to the following examples. But the following Examples are intended to illustrate the present disclosure, and the scope of the Examples is not limited thereto only.

### [Example]

### Preparation of a PHA emulsion

### Example 1

### (1) Preparation of a suspension comprising a PHA

40 parts by weight of a polyhydroxyalkanoate (PHA) powder (4-hydroxybutyrate (4-HB) content: 8.5% by weight, weight average molecular weight (Mw): 350,000 g/mole, manufacturer: CJ CheilJedang), 20 parts by weight of polyvinyl alcohol (PVA, manufacturer: Kuraray) having a concentration of 10%, and 40 parts by weight of distilled water (DI water) were added to a 1-liter glass beaker. It was then subjected to a high-speed dispersion treatment for 30 minutes using a homogenizer (maximum rotation speed: 12,000 rpm) at a speed of 60% to 80% of the maximum rotational speed per minute (rpm) under room temperature and atmospheric pressure conditions to prepare a suspension.

### (2) Removal of a defect from the suspension

The suspension was charged to a high-pressure homogenizer (product name: Atomo 3.0, manufacturer: Bertori) and ground once at a pressure of 500 bar for 10 minutes.

### (3) Preparation of a PHA emulsion

0.5 parts by weight of carrageenan (manufacturer: Daein Materials) as a thickener and 0.1 parts by weight of K10N (manufacturer: Wonjin Chemical) as an antimicrobial agent were added to 100 parts by weight of the suspension from which the defect had been removed and stirred under atmospheric pressure conditions to prepare a PHA emulsion.

### Example 2

### (1) Preparation of a suspension comprising a PHA

It was prepared in the same manner as the step of preparing a suspension in Example 1.

### (2) Removal of a defect in the suspension

The suspension was charged to a high-pressure homogenizer (product name: Atomo 3.0, manufacturer: Bertori) and ground once at a pressure of 1,500 bar for 20 minutes.

### (3) Preparation of a PHA emulsion

It was prepared in the same manner as the step of preparing a PHA emulsion in Example 1.

### Example 3

### (1) Preparation of a suspension comprising a PHA

It was prepared in the same manner as the step of preparing a suspension in Example 1.

### (2) Removal of a defect from the suspension

The suspension was charged to a high-pressure homogenizer (product name: Atomo 3.0, manufacturer: Bertori) and ground once at a pressure of 200 bar for 7 minutes.

### (3) Preparation of a PHA emulsion

It was prepared in the same manner as the step of preparing a PHA emulsion in Example 1.

### Example 4

### (1) Preparation of a suspension comprising a PHA

It was prepared in the same manner as the step of preparing a suspension in Example 1.

### (2) Removal of a defect from the suspension

The suspension was charged to a high-pressure homogenizer (product name: Atomo 3.0, manufacturer: Bertori) and ground once at a pressure of 2,000 bar for 30 minutes.

### (3) Preparation of a PHA emulsion

It was prepared in the same manner as the step of preparing a PHA emulsion in Example 1.

### Comparative Example 1

### (1) Preparation of a suspension comprising a PHA

It was prepared in the same manner as the step of preparing a suspension in Example 1.

### (2) Removal of a defect from the suspension

The suspension was filtered once over 40 minutes using a filter mesh having a pore size of 110 µm under room temperature and atmospheric pressure conditions.

### (3) Preparation of a PHA emulsion

It was prepared in the same manner as the step of preparing a PHA emulsion in Example 1.

### Comparative Example 2

### (1) Preparation of a suspension comprising a PHA

It was prepared in the same manner as the step of preparing a suspension in Example 1.

### (2) Removal of a defect from the suspension

The suspension was subjected to a high-speed dispersion treatment for 30 minutes using a homogenizer (maximum rotation speed: 12,000 rpm) at a speed of 60% to 80% of the maximum rotational speed per minute (rpm) under room temperature and atmospheric pressure conditions.

### (3) Preparation of a PHA emulsion

It was prepared in the same manner as the step of preparing a PHA emulsion in Example 1.

### Comparative Example 3

### (1) Preparation of a suspension comprising a PHA

It was prepared in the same manner as the step of preparing a suspension in Example 1.

### (2) Removal of a defect from the suspension

The suspension was subjected to a high-speed dispersion treatment for 60 minutes using a homogenizer (maximum rotation speed: 12,000 rpm) at a speed of 60% to 80% of the maximum rotational speed per minute (rpm) under room temperature and atmospheric pressure conditions.

### (3) Preparation of a PHA emulsion

It was prepared in the same manner as the step of preparing a PHA emulsion in Example 1.

### Comparative Example 4

### (1) Preparation of a suspension comprising a PHA

It was prepared in the same manner as the step of preparing a suspension in Example 1.

### (2) Removal of a defect from the suspension

The suspension was charged to a high-pressure homogenizer (product name: Atomo 3.0, manufacturer: Bertori) and ground once at a pressure of 100 bar for 5 minutes.

### (3) Preparation of a PHA emulsion

It was prepared in the same manner as the step of preparing a PHA emulsion in Example 1.

### Comparative Example 5

### (1) Preparation of a suspension comprising a PHA

It was prepared in the same manner as the step of preparing a suspension in Example 1.

### (2) Removal of a defect from the suspension

The suspension was charged to a high-pressure homogenizer (product name: Atomo 3.0, manufacturer: Bertori) for a grinding treatment at a pressure of 2,500 bar. However, the agglomerated and surface-crystallized particles exploded or erupted due to pressurization, making the solid-liquid dispersion treatment impossible.

### (3) Preparation of a PHA emulsion

It was prepared in the same manner as the step of preparing a PHA emulsion in Example 1.

### Test Example 1: Average particle size

The PHA emulsions of Examples 1 to 4 and Comparative Examples 1 to 5 were each measured for the average particle size using a particle size analyzer (product name: LS I3 220, manufacturer: Beckman Coulter^{™}).

### Test Example 2: Evaluation of grit removal

The PHA emulsions of Examples 1 to 4 and Comparative Examples 1 to 5 were each evaluated for the degree of grit removal. Specifically, one side of a paper substrate having a size of 210 mm in width and 297 mm in length was coated with each PHA emulsion, and the number of grit (average particle size of 6 µm or more) visually observed was counted over the entire area to evaluate the degree of grit removal.
⊚: less than 3
○: 3 to 5
△: greater than 5 to 20
×: greater than 20

### Test Example 3: Loss percentage (%)

For the process for preparing the PHA emulsions of Examples 1 to 4 and Comparative Examples 1 to 5, the loss rate (%) according to the following Equation A was calculated to evaluate the yield. [Equation A] $Loss percentage \left(%\right) = \left(\left(Wa-Wc\right)/Wa\right) \times 100$

In Equation A, Wa is the volume (ml) of the suspension comprising a PHA (solids content of 40% by weight) before the step of removing defects, and Wc is the volume (ml) of the suspension from which the defects have been removed.

**[Table 1]**

| | Avg. particle size (µm) | Evaluation of grit removal | Loss percentage (%) |
|---|---|---|---|
| Ex. 1 | 2.9 | ⊚ | 7.1 |
| Ex. 2 | 2.5 | ⊚ | 7.4 |
| Ex. 3 | 3.0 | ⊚ | 6.4 |
| Ex. 4 | 2.3 | ⊚ | 7.6 |
| C. Ex. 1 | 3.3 | ○ | 7.4 |
| C. Ex. 2 | 3.2 | × | 6.1 |
| C. Ex. 3 | 3.2 | × | 6.5 |
| C. Ex. 4 | 3.2 | Δ | 6.4 |
| C. Ex. 5 | - | - | - |

As can be seen from Table 1 above, the PHA emulsions of Examples 1 to 4 were able to secure a low average particle size even in a short process time, resulting in an excellent grit removal effect.

Specifically, the grit removal step was carried out at a pressure of 200 bar to 2,000 bar in Examples 1 to 4, resulting in excellent effects in terms of average particle size and grit removal even in a shorter process time as compared with Comparative Example 1, in which a conventional filtration step was carried out, and Comparative Examples 2 and 3, in which a conventional dispersion treatment was carried out. In addition, Comparative Example 4, which did not satisfy the process conditions according to the present disclosure, was not so good as Examples 1 to 4 in terms of average particle size and grit removal. In Comparative Example 5, the agglomerated and surface-crystallized particles exploded or erupted due to pressurization, making the solid-liquid dispersion treatment impossible.

## Claims

1. A process for preparing a polyhydroxyalkanoate emulsion, which comprises preparing a suspension comprising a polyhydroxyalkanoate (PHA); and removing defects from the suspension, wherein the removing the defects is carried out at a pressure of 200 bar to 2,000 bar.

2. The process for preparing a polyhydroxyalkanoate emulsion of claim 1, wherein the preparing the suspension and the removing the defects from the suspension are carried out at different pressures.

3. The process for preparing a polyhydroxyalkanoate emulsion of claim 1, wherein the removing the defects is carried out for a time period of greater than 5 minutes and up to 60 minutes.

4. The process for preparing a polyhydroxyalkanoate emulsion of claim 1, wherein the defects comprise particles comprising grit or grains, and the particles have an average particle diameter of 6 µm or more and an average particle size distribution of 10 µm or less.

5. The process for preparing a polyhydroxyalkanoate emulsion of claim 1, wherein a surfactant is added in an amount of 2.5 parts by weight to 20 parts by weight relative to 100 parts by weight of the PHA in the preparing the suspension.

6. The process for preparing a polyhydroxyalkanoate emulsion of claim 5, wherein the surfactant comprises at least one selected from the group consisting of polyvinyl alcohol, sodium dodecylbenzene sulfonate, polyvinylpyrrolidone, methyl polyethylene alkyl ether, alkyl benzene sulfonate, nonylphenol ether sulfate, sodium lauryl sulfate, lithium dodecyl sulfate, alkyl phosphate, glyceryl ester, and polypropylene glycol ester.

7. The process for preparing a polyhydroxyalkanoate emulsion of claim 1, wherein the preparing the suspension comprises performing a high-speed dispersion using a homogenizer under room temperature and atmospheric pressure, at a speed of 55% to 85% of the maximum rotation speed per minute (rpm) of the homogenizer for 10 minutes to 60 minutes .

8. The process for preparing a polyhydroxyalkanoate emulsion of claim 1, which further comprises adding at least one additive selected from the group consisting of a thickener, an antimicrobial agent, a stabilizer, and a pH adjuster to the suspension from which the defect has been removed.

9. The process for preparing a polyhydroxyalkanoate emulsion of claim 8, wherein the amount of the additive is 0.005 parts by weight to 30 parts by weight relative to 100 parts by weight of the suspension from which the defect has been removed.

10. The process for preparing a polyhydroxyalkanoate emulsion of claim 1, wherein the PHA is a polyhydroxyalkanoate copolymer comprising a 4-hydroxybutyrate (4-HB) repeat unit and a 3-hydroxybutyrate (3-HB) repeat unit and comprises the 4-hydroxybutyrate (4-HB) repeat unit in an amount of 0.1% by weight to 60% by weight.

11. The process for preparing a polyhydroxyalkanoate emulsion of claim 1, wherein the PHA has a weight average molecular weight of 30,000 g/mole to 1,200,000 g/mole.

12. The process for preparing a polyhydroxyalkanoate emulsion of claim 1, wherein the PHA comprises a semi-crystalline PHA, and the semi-crystalline PHA comprises a 4-hydroxybutyrate (4-HB) repeat unit in an amount of 0.1% by weight to 30% by weight and has a glass transition temperature (Tg) of -30°C to 80°C, a crystallization temperature (Tc) of 30°C to 130°C, and a melting temperature (Tm) of 100°C to 175°C.

13. A polyhydroxyalkanoate emulsion, which is prepared by the process for preparing a polyhydroxyalkanoate emulsion according to claim 1.

14. The polyhydroxyalkanoate emulsion of claim 13, wherein the PHA emulsion has an average particle size of 1.5 µm to 4.5 µm, a particle size deviation of ±5 µm or less, a polydispersity index (PDI) of 3 or less, a viscosity of 100 cps to 3,000 cps, and a pH of 6.5 to 11.
